# EUROPÄISCHE PATENTANMELDUNG

(11) **EP 2 008 703 A1**
(43) Veröffentlichungstag der Anmeldung: **31.12.2008**
(21) Anmeldenummer: 08166114.2
(22) Anmeldetag: 28.02.2002
(51) Int. Cl.: B01D 61/12, B01D 61/02, C02F 1/44

(54) **Umkehrosmose-Anlage**

(30) Priorität: 14.03.2001 DE 10112719; 14.03.2001 DE 10112725; 14.03.2001 DE 10112730
(62) Teilanmeldung aus: 02004573.8
(71) Anmelder: Michelbach, Ludwig, 90513 Zirndorf (DE)
(72) Erfinder: Michelbach, Ludwig, 90513 Zirndorf (DE)
(74) Vertreter: Zech, Stefan Markus

(57) **Zusammenfassung**

Die Erfindung betrifft eine Umkehrosmose-Anlage für Rohwasser, insbesondere Stadt- oder Brunnenwasser, zur Gewinnung von salzarmen Diluat oder Permeat. Die Umkehrosmose-Anlage umfasst wenigstens ein Umkehrosmose-Modul (10, 11) mit einem Rohwassereingang (13), einem Konzentratausgang (14) sowie einem Diluatausgang (15) und eine das Umkehrosmose-Modul (10, 11) mit dem Rohwasser beaufschlagende Pumpe (16). Erfindungsgemäß ist vorgesehen, dass an der Pumpe (16) oder zwischen Pumpe (16) und Rohwassereingang (13) eine Druckregelungseinrichtung (9) vorgesehen ist, die einen Rohwasserdruck P_{R} in Abhängigkeit von einem vorbestimmten Diluatdruck P_{D} am Diluatausgang (15) einstellt, wobei der vorbestimmte Diluatdruck P_{D} an die Anforderungen nachschaltbarer Verbraucher anpassbar ist. Alternativ oder zusätzlich ist als eine Pumpe (16) eine Plungerpumpe vorgesehen.

## Beschreibung

Die Erfindung betrifft eine Umkehrosmose-Anlage gemäß dem Oberbegriff des Patentanspruches 1.

Durch ein Umkehrosmose-Verfahren kann Wasser nahezu vollständig entsalzt werden. Der Vorteil dieses Verfahrens liegt vor allem in der geringen Umweltbelastung. Für dieses Verfahren sind keinerlei Chemikalien erforderlich.

Das auf diese Weise entsalzte Wasser wird insbesondere in der Industrie, Pharmazie und in Krankenhäusern eingesetzt. Auch für die Luftbefeuchtung in Lüftungs- und Klimaanlagen wird oftmals ein auf diese Weise entsalztes Wasser verwendet. Weiterhin können Umkehrosmose-Anlagen für die Aufbereitung von Meerwasser verwendet werden. Meerwasser ist wegen des hohen Salzgehalts als Trinkwasser ungeeignet. Mit Hilfe einer Umkehrosmose-Anlage kann der Salzgehalt von Meerwasser soweit reduziert werden, dass es als Trinkwasser geeignet ist. Solche Anlagen werden insbesondere in Küstenregionen mit wenig oder keinem Süßwasservorkommen benötigt.

Aus dem Stand der Technik ist eine Umkehrosmose-Anlage bekannt, der eine Enthärtungsanlage vorgeschaltet ist. In dieser Enthärtungsanlage wird Rohwasser auf weniger als 1°dH entkalkt. Der Ausgang der Enthärtungsanlage ist mit dem Eingang der Umkehrosmose-Anlage gekoppelt. Am Eingang weist die Umkehrosmose-Anlage eine Pumpe auf, die das enthärtete Wasser mit einem Druck von etwa 1 bar bis 20 bar durch Module presst. In den Modulen findet das eigentliche Umkehrosmose-Verfahren statt, indem das Wasser mit Druck gegen halbdurchlässige Membrane gepresst wird. Dabei werden Salze und/oder Mineralien ausgefiltert, wobei sich das Rohwasser in ein Permeat (Diluat) und ein Konzentrat aufspaltet. Das Permeat (Diluat) ist als besonders salzarmes Wasser weiter verwendbar. Das Konzentrat ist ein Abfallprodukt und wird verworfen. Üblicherweise produziert ein Modul in etwa 75% Permeat (Diluat) und 25% Konzentrat. Der Pumpendruck sowie die Permeat- und Konzentratmenge sind manuell einstellbar. Das Permeat wird in einem drucklosen Behälter gespeichert und von dort an einen Endverbraucher weitergepumpt.

Diese herkömmliche Umkehrosmose-Anlage hat den Nachteil, dass das Wasser in dem Behälter aufkeimen kann. Dies ist insbesondere darauf zurückzuführen, dass der Behälter niemals ganz dicht ist und das Wasser oftmals längere Zeit in dem Behälter verbleibt. Durch eine Erwärmung des Wassers im Behälter, insbesondere im Sommer, wird das Aufkeimen zusätzlich gefördert. Zur Verhinderung der Verkeimung werden UV-Lampen, Chemikalien oder zusätzliche Leitungen verwendet, was jedoch den Energieaufwand, die Umweltbelastung und den konstruktiven Aufwand erhöht.

Üblicherweise werden für Umkehrosmose-Anlagen Kreiselpumpen verwendet, die das enthärtete Wasser durch die Module pressen. Bei einer Kreiselpumpe ist jedoch die Wärmeentwicklung verhältnismäßig hoch, so dass dadurch auch das Wasser erwärmt wird. Durch diese Erwärmung kann insbesondere das Aufkeimen gefördert werden.

Ein weiterer bedeutender Nachteil wird durch die Einschaltphase der Umkehrosmose-Anlage bewirkt. Während dieser Einschaltphase hat das Wasser einen wesentlich höheren Leitwert, etwa 150 bis 200 µS/cm, als erwünscht. Weiterhin hat die herkömmliche Umkehrosmose-Anlage einen verhältnismäßig hohen Platzbedarf. Schließlich hat die manuelle Einstellung wichtiger Größen unerwünschte Ungenauigkeiten zur Folge.

Außerdem besteht bei den Umkehrosmose-Modulen die Gefahr, dass sie versalzen. Wird nur wenig oder überhaupt kein Wasser entnommen, werden die Umkehrosmose-Module nicht ausreichend gespült. Idealerweise sollten die Umkehrosmose-Module permanent gespült werden, damit kein Salz auskristallisiert werden kann. Diese Versalzung vermindert die Durchflussrate der Umkehrosmose-Module und könnte zu deren Verstopfung führen, was einen Ausfall der gesamten Anlage zur Folge haben könnte.

Schließlich haben herkömmliche Umkehrosmose-Anlagen den Nachteil, dass der Salzgehalt am Ausgang der Anlage nicht regelbar ist.

Es ist Aufgabe der Erfindung, eine Umkehrosmose-Anlage bereit zu stellen, die die oben genannten Nachteile überwindet.

Diese Aufgabe wird durch den Gegenstand gemäß Patentanspruch 1 gelöst.

Erfindungsgemäß ist vorgesehen, dass an der Pumpe oder zwischen Pumpe und Rohwassereingang eine Druckregelungseinrichtung vorgesehen ist, die einen Rohwasserdruck P_{R} in Abhängigkeit von einem vorbestimmten Diluatdruck P_{D} am Diluatausgang einstellt. Durch diese Maßnahme wird in wenigstens einem Modul lediglich soviel Rohwasser zugeführt, wie eine entsprechende Menge an salzarmen Diluat am Diluatausgang benötigt wird. Es wird also kein überschüssiges Diluat produziert. Deshalb ist auch kein Behälter erforderlich, in dem das Diluat aufkeimen könnte. Ebenso wenig ist eine Druckerhöhungspumpe erforderlich, da der benötigte Druck bereits von der Pumpe, die dem Modul vorgeschaltet ist, bereitgestellt wird. Durch das Wegfallen des Behälters und der Druckerhöhungspumpe verringert sich auch der konstruktive Aufwand der gesamten Anlage.

Insbesondere kann vorgesehen sein, dass die Druckregelungseinrichtung einen Frequenzumwandler zur Ansteuerung der Pumpe umfasst derart, dass die Pumpe über einen kontinuierlichen Druckbereich insbesondere von 10 - 80 bar einstellbar ist. Die Verwendung des Frequenzumwandlers ermöglicht eine verlustlose Regelung. Der Pumpe wird nur diejenige Energie zugeführt, die tatsächlich benötigt wird. Es wird keine überschüssige Energie in Wärme umgewandelt.

Weiterhin kann vorgesehen sein, dass zur Erfassung des Diluatdruckes P_{D} ein Drucksensor an dem am Diluatausgang angeordneten Diluat-Leitungssystem vorgesehen ist. Durch eine derartige Platzierung des Drucksensors ist eine besonders genaue Druckerfassung möglich. Insbesondere in dem Diluat-Leitungssystem ist die Strömung im wesentlichen laminar, so dass Messfehler sehr gering bleiben.

Außerdem kann noch vorgesehen sein, dass zur Steuerung der Pumpe mittels der Druckregelungseinrichtung ergänzend zum Diluatdruck P_{D} der am Rohwassereingang vorhandene Rohwasserdruck P_{R} berücksichtigt wird. Dadurch kann die Druckregelungseinrichtung auch auf Schwankungen des Rohwasserdruckes P_{R} reagieren. Auf diese Weise wird der Druck am Ausgang der Pumpe besonders genau eingestellt.

Schließlich kann eine Konzentratrückführung vorgesehen sein, um das am Konzentratausgang austretende Konzentrat ganz oder teilweise erneut durch das Umkehrosmose-Modul zu führen. Durch diese Maßnahme werden die Regelungsmöglichkeiten der gesamten Anlage erhöht. Insbesondere kann der elektrische Leitwert von Diluat und Konzentrat entsprechend den Anforderungen eingestellt werden.

Dabei kann vorgesehen sein, dass die Konzentratrückführung ein Rückführventil umfasst, das in Abhängigkeit von der gewünschten Diluatmenge und/oder der Ionenkonzentration I_{C} des Diluats einen bestimmten Teil des Konzentrats durch die Konzentratsrückführung leitet. Dadurch kann auch die Ionenkonzentration I_{C} auf einen konstanten Wert eingestellt werden.

Bei einer besonders bevorzugten Ausführungsform ist vorgesehen, dass die Pumpe als Plungerpumpe ausgebildet ist. Die Plungerpumpe weist praktisch überhaupt keine oder nur eine geringe Wärmeentwicklung auf, so dass dadurch auch das Wasser nicht erwärmt werden kann. Dadurch wird die Keimbildung verhindert oder zumindest unterdrückt. Weiterhin haben Plungerpumpen den Vorteil, dass sie kontinuierlich über einen großen Druckbereich von 0 bis 80 bar einstellbar sind. Mit Verwendung der Plungerpumpe lässt sich eine Umkehrosmose-Anlage bereitstellen, die auch ohne Druckregelungseinrichtung die oben genannten Probleme überwindet, die bei herkömmlichen Umkehrosmose-Anlagen auftreten.

Weitere Merkmale, Vorteile und Ausgestaltungen der Erfindung sind Gegenstand der Unteransprüche.

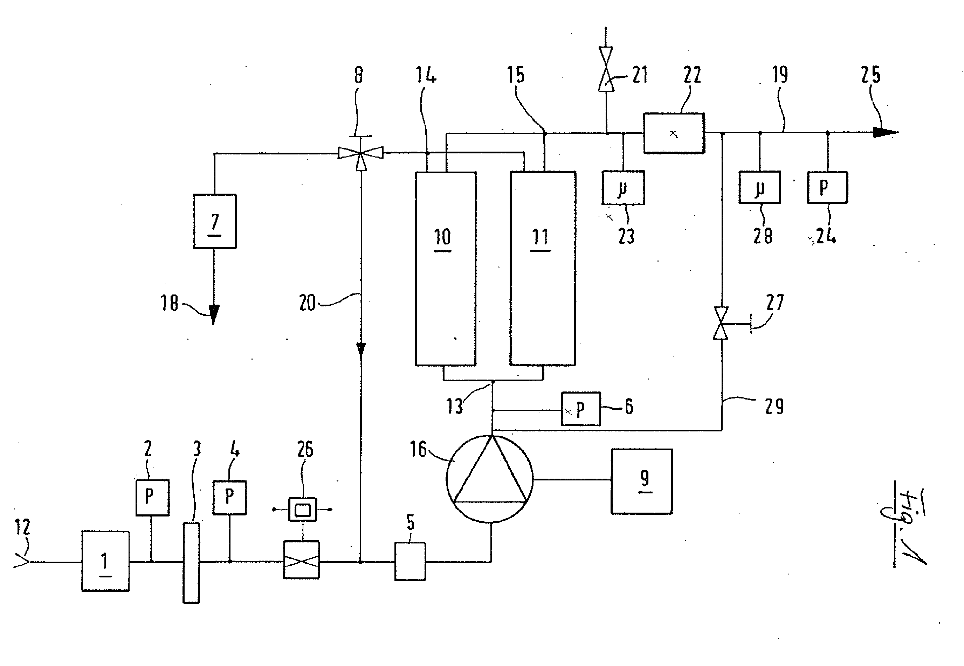

Eine bevorzugte Ausführungsform der Erfindung wird nachstehend anhand der beigefügten Zeichnung näher erläutert.

Die einzige Figur zeigt ein Blockschaltbild der bevorzugten Ausführungsform der erfindungsgemäßen Umkehrosmose-Anlage.

Die Umkehrosmose-Anlage weist einen Eingang 12 auf. Diesem Eingang 12 sind in Reihe eine Härtegrad-Überwachungseinrichtung 1, ein erster Drucksensor 2, ein Filter 3, ein zweiter Drucksensor 4, ein Magnetventil 26, ein Druckschalter 5 und eine Pumpe 16 nachgeschaltet. Dem Ausgang der Pumpe 16 ist ein dritter Drucksensor 6 zugeordnet. Weiterhin weist die Pumpe 16 einen Steuereingang auf, der mit einem Frequenzumwandler 9 gekoppelt ist. Der Ausgang der Pumpe ist mit einem Rohwassereingang 13 zweier parallel geschalteter Umkehrosmose-Module 10 und 11 gekoppelt. Die Umkehrosmose-Module 10 und 11 weisen außerdem einen Konzentratausgang 14 und einen Diluatausgang 15 auf. Dem Konzentratausgang 14 ist ein Regelventil 8 nachgeschaltet. Das Regelventil 8 weist zwei Ausgänge auf. Der eine Ausgang des Regelventils 8 ist über eine Rückführleitung 20 mit dem Koppelpunkt des Druckschalters 5 und des Magnetventils 26 verbunden. Der andere Ausgang des Regelventils 8 ist über einen Wasserzähler 7 mit einem Konzentratabflussß 18 verbunden. Dem Diluatausgang 15 sind ein Zapfhahn 21, ein erster Leitwertsensor 23, ein zweiter Wasserzähler 22, ein zweiter Leitwertsensor 28, ein vierter Drucksensor 24 und ein Diluatabfluß 25 nachgeschaltet, die über ein Diluatleitungssystem 19 verbunden sind. Das Diluatleitungssystem 19 ist über eine Überbrückungsleitung 29 mit dem Ausgang der Pumpe 16 verbunden. Die Überbrückungsleitung 29 weist ein zweites Regelventil 27 auf.

Über den Eingang 12 wird der Umkehrosmose-Anlage Rohwasser zugeführt, das üblicherweise in einer Enthärtungsanlage entkalkt worden ist. Die Härtegrad-Überwachungseinrichtung 1 ist dazu vorgesehen, den Härtegrad des Rohwassers zu erfassen, so dass bei Überschreitung eines vorbestimmten Grenzwertes die weitere Zufuhr von Rohwasser, beispielsweise durch Schließen des Magnetventils 26, automatisch oder manuell unterbunden werden kann. Vorzugsweise wird bei einer Überschreitung des Wertes 1° dH die Umkehrosmose-Anlage automatisch abgeschaltet. Auf diese Weise wird verhindert, dass Wasser mit einem höheren Härtegrad in die Umkehrosmose-Module 10 und 11 gelangt. Dies hätte zur Folge, dass die Umkehrosmose-Module 10 und 11 verstopft werden würden, und letztlich die gesamte Umkehrosmose-Anlage ausfallen würde. Durch die Verwendung der Härtegrad-Überwachungseinrichtung 1 wird der gesamte Wartungsaufwand der Anlage erheblich reduziert. Das Magnetventil 26 kann mit Abschalten der Anlage geschlossen werden, um beispielsweise ein Spülen der Anlage zu ermöglichen.

Die Pumpe 16 ist dazu vorgesehen, das Rohwasser mit Druck, je nach Bauart zwischen 1 und 80 bar, in die Umkehrosmose-Module 10 und 11 zu pressen. Die Pumpe 16 wird von dem Frequenzumwandler 9 angesteuert. Dem Frequenzumwandler 9 ist vorzugsweise ein DDC-Regler vorgeschaltet. Der Druck am Ausgang der Pumpe 16 wird in Abhängigkeit von denjenigen Werten geregelt, die durch den dritten Drucksensor 6, den zweiten Wasserzähler 22, den Leitwertsensor 23 und den vierten Drucksensor 24 erfasst werden. Auf diese Weise wird die Pumpe 16 derart geregelt, dass den Umkehrosmose-Modulen 10 und 11 soviel Rohwasser zugeführt wird, wie Diluat am Diluatabfluß 25 von einem Endverbraucher benötigt wird. Eine Zwischenlagerung des Diluats in einem Behälter oder dergleichen ist nicht erforderlich. Somit wird eine Keimbildung unterbunden, die oftmals in derartigen Behältern auftritt. Vorzugsweise sind die Umkehrosmose-Module 10 und 11 separat zu- und abschaltbar. Auf diese Weise kann in Abhängigkeit von der geforderten Diluatmenge, insbesondere bei noch mehr Modulen, die gesamte Anlage geregelt werden.

Das Regelventil 8 ist als 2-Wege-Ventil ausgebildet. Mit dem Regelventil 8 kann eingestellt werden, welcher Anteil des Konzentrats über die Rückführleitung 20 an den Vorlauf der Pumpe 16 rückgeführt wird. Beispielsweise kann das Regelventil 8 von einem DDC-Regler angesteuert werden. Der übrige Anteil des Konzentrats wird über den ersten Wasserzähler 7 dem Konzentratabfluss 18 zugeführt. Das dem Konzentratabfluss 18 zugeführte Konzentrat wird üblicherweise als Abfall verworfen. Durch die einstellbare Rückführung des Konzentrats werden die Regelungsmöglichkeiten der gesamten Umkehrosmose-Anlage erhöht. Insbesondere ist dadurch das Konzentrat stetig einstellbar.

Die Überbrückungsleitung 29 und das zweite Regelventil 27 bilden bei der hier beschriebenen Ausführungsform Bestandteile einer Verschneideeinrichtung. Dadurch werden insbesondere die Umkehrosmose-Module 10 und 11 überbrückt, so dass ein Teil des gefilterten Rohwassers direkt dem Diluatleitungssystem 19 und dem Diluatabfluss 25 zugeführt werden kann. Damit wird eine weitere Regelungsmöglichkeit für die Umkehrosmose-Anlage bereitgestellt. Ein Teil des gefilterten Rohwassers kann damit an den beiden Umkehrosmose-Modulen 10 und 11 vorbei dem Diluatabfluss 25 zugeführt werden, wenn vom Endverbraucher ein entsprechender vorbestimmter Salzgehalt toleriert wird. Vorzugsweise wird der aktuelle Leitwert des verschnittenen Diluats vom zweiten Leitwertsensor 28 erfasst. Je nach vom Endverbraucher tolerierten Salzgehalt kann dann mittels des Regelventils 27 das Verhältnis von aus den Umkehrosmose-Modulen 10 und 11 ausgegebenem Diluatfluss und des durch die Überbrückungsleitung 29 geführten gefilterten Rohwassers manuell oder automatisch eingestellt werden. Weiterhin kann es vorteilhaft sein, zusätzlich auch den aktuellen Leitwert des aus den Umkehrosmose-Modulen 10 und 11 ausgegebenen Diluats vor der Verschneidung mit gefiltertem Rohwasser im ersten Leitwertsensor 23 zu erfassen. Die Regelung kann dadurch verbessert werden, da anhand der Qualität des aus den Umkehrosmose-Modulen 10 und 11 ausgegebenen Diluats die mutmaßlich mögliche Zugabe von gefiltertem Rohwasser über die Überbrückungsleitung 29 abgeschätzt werden kann. Eine Überprüfung kann dann noch durch Bestimmung des Leitwerts des verschnittenen Diluats im zweiten Leitwertsensor 28 erfolgen. Dieses Verfahren ist besonders ökonomisch, da durch die beiden Umkehrosmose-Module 10 und 11 nicht mehr Wasser als nötig hindurch befördert wird. Dies wirkt sich günstig für die Wartungsintervalle der Umkehrosmose-Module 10 und 11 aus.

Mit der Verschneideeinrichtung wird eine weitere Möglichkeit geschaffen, den konstruktiven und technologischen Aufwand für die Umkehrosmose-Anlage optimal an die jeweils vorliegenden Anforderungen anzupassen. Die Überbrückungsleitung 29 und das zweite Regelungsventil 27 sind kostengünstige Bauteile, die außerdem einen geringen Wartungsaufwand erfordern. Durch die Verschneideeinrichtung kann die Durchflussrate der beiden Umkehrosmose-Module 10 und 11 wesentlich geringer sein als die der gesamten Umkehrosmose-Anlage.

Insbesondere ist vorgesehen, dass die Umkehrosmose-Anlage mit einer EDV-Anlage gekoppelt sein kann. Dabei werden die erfassten Messwerte sämtlicher Sensoren der EDV-Anlage zugeführt. Auf der Grundlage dieser Messwerte werden der Frequenzumwandler 9 und das Regelventil 8 von der EDV-Anlage angesteuert. Auf diese Weise ist eine ständige Überwachung der Umkehrosmose-Anlage mittels der EDV-Anlage möglich. Ein Display der EDV-Anlage ist für die ständige optische Überwachung der wichtigsten Messdaten vorgesehen. Eine permanente Aufzeichnung der erfassten Messwerte ist ebenfalls vorgesehen. Die EDV-Anlage lässt sich mittels eines PC kostengünstig realisieren. Beispielsweise kann auch eine SPS-Steuerung verwendet werden. Sämtliche Daten und eventuelle Störfälle können unmittelbar und unverzüglich an eine Leitstelle weitergeleitet werden. Weiterhin sei darauf hingewiesen, dass die erfindungsgemäße Anlage einen sehr geringen Platzbedarf hat. Schließlich kann mit dieser Anlage die für Keimbildung relevante DIN 6022 problemlos eingehalten werden. Auch die gemäß der Trinkwasserverordnung relevante DIN 2000, die ebenfalls die Keimbildung betrifft, kann mit der erfindungsgemäßen Umkehrosmose-Anlage erfüllt werden.

Bei Verwendung einer Plungerpumpe 16 wird die Keimbildung zusätzlich unterdrückt. Dies ist darauf zurückzuführen, dass bei der Plungerpumpe 16 die Wärmeentwicklung nur gering oder praktisch gar nicht vorhanden ist. Dadurch wird das Wasser auch nicht zusätzlich aufgeheizt.

Es sei an dieser Stelle ausdrücklich darauf hingewiesen, dass bei Verwendung der Plungerpumpe 16 die erfindungsgemäße Umkehrosmose-Anlage auch ohne die Druckregelungseinrichtung 9 in vorteilhafter Weise verwendet werden kann. Aufgrund der sehr geringen Wärmeentwicklung und des großen Druckbereichs der Plungerpumpe 16 lassen sich mehrere Probleme überwinden, die bei herkömmlichen Umkehrosmose-Anlagen auftreten.

Die erfindungsgemäße Umkehrosmose-Anlage kann in der Industrie verwendet werden. Für zahlreiche Herstellungsverfahren und Produkte wird Wasser mit einem niedrigen Salzgehalt benötigt. Insbesondere für die Pharma-Industrie ist diese Umkehrosmose-Anlage vorteilhaft geeignet. Neben dem extrem niedrigen Salzgehalt ist auch die Keimbildung sehr gering, was insbesondere für pharmazeutische Produkte wichtig ist. Auch in Krankenhäusern kann die erfindungsgemäße Umkehrosmose-Anlage verwendet werden, wo ebenfalls die niedrige Keimbildung neben dem niedrigen Salzgehalt eine wichtige Rolle spielt. Schließlich kann die erfindungsgemäße Umkehrosmose-Anlage als Meerwasser-Aufbereitungsanlage verwendet werden, so dass auf diese Weise Trinkwasser gewonnen werden kann. In Küstenregionen, die nur geringes Süßwasservorkommen aufweisen, kann die erfindungsgemäße Umkehrosmose-Anlage besonders effizient für die Bereitstellung von Trinkwasser verwendet werden.

### Bezugszeichenliste

- 1: Härtegrad-Überwachungseinrichtung
- 2: Erster Drucksensor
- 3: Filter
- 4: Zweiter Drucksensor
- 5: Druckschalter
- 6: Dritter Drucksensor
- 7: Erster Wasserzähler
- 8: Erstes Regelventil
- 9: Frequenzumwandler
- 10: Umkehrosmose-Modul
- 11: Umkehrosmose-Modul
- 12: Eingang
- 13: Rohwassereingang
- 14: Konzentratausgang
- 15: Diluatausgang
- 16: Pumpe
- 18: Konzentratabfluss
- 19: Diluatleitungssystem
- 20: Rückführleitung
- 21: Zapfhahn
- 22: Zweiter Wasserzähler
- 23: Erster Leitwertsensor
- 24: Vierter Drucksensor
- 25: Diluatabfluss
- 26: Magnetventil
- 27: Zweites Regelventil
- 28: Zweiter Leitwertsensor
- 29: Überbrückungsleitung

## Patentansprüche

1. Umkehrosmose-Anlage für Rohwasser, insbesondere Stadt- oder Brunnenwasser, zur Gewinnung von salzarmen Diluat oder Permeat, umfassend
- wenigstens ein Umkehrosmose-Modul (10, 11) mit einem Rohwassereingang (13), einem Konzentratausgang (14) sowie einem Diluatausgang (15) und
- eine die Umkehrosmose-Module (10, 11) mit dem Rohwasser beaufschlagende Pumpe (16),
**dadurch gekennzeichnet, dass**
an der Pumpe (16) oder zwischen Pumpe (16) und Rohwassereingang (13) eine Druckregelungseinrichtung (9) vorgesehen ist, die einen Rohwasserdruck P_{R} in Abhängigkeit von einem vorbestimmten Diluatdruck P_{D} am Diluatausgang (15) einstellt, wobei der vorbestimmte Diluatdruck P_{D} an die Anforderungen nachschaltbarer Verbraucher anpassbar ist.

2. Umkehrosmose-Anlage nach Anspruch 1,
**dadurch gekennzeichnet, dass**
die Druckregelungseinrichtung einen Frequenzumwandler (9) zur Ansteuerung der Pumpe (16) umfasst, derart, dass die Pumpe (16) über einen kontinuierlichen Druckbereich, insbesondere von 1 bis 80 bar einstellbar ist.

3. Umkehrosmose-Anlage nach Anspruch 1 oder 2,
**dadurch gekennzeichnet, dass**
zur Erfassung des Diluatdruckes P_{D} ein Drucksensor (24) an dem Diluatausgang (15) oder an einem abstromseitig zum Diluatausgang (15) angeordneten Diluat-Leitungssystem (19) vorgesehen ist.

4. Umkehrosmose-Anlage nach einem der Ansprüche 1 bis 3,
**dadurch gekennzeichnet, dass**
zur Steuerung der Pumpe (16) mittels der Druckregelungseinrichtung ergänzend zum Diluatdruck P_{D} der am Rohwassereingang (13) vorhandene Rohwasserdruck P_{R} berücksichtigt wird.

5. Umkehrosmose-Anlage nach einem der Ansprüche 1 bis 5,
**dadurch gekennzeichnet, dass**
die Umkehrosmose-Anlage am Eingang (12) eine Härtegrad-Überwachungseinrichtung (1) aufweist, um die Rohwasserzufuhr bei Überschreitung eines vorbestimmten Härtegrades zu stoppen.

6. Umkehrosmose-Anlage nach einem der Ansprüche 1 bis 5,
**dadurch gekennzeichnet, dass**
die Umkehrosmose-Module (10, 11) separat zu- und abschaltbar sind.

7. Umkehrosmose-Anlage nach einem der Ansprüche 1 bis 6,
**dadurch gekennzeichnet, dass**
eine Konzentratrückführung (20) vorgesehen ist, um das am Konzentratausgang (14) austretende Konzentrat ganz oder teilweise erneut durch das Umkehrosmose-Modul (10, 11) zu führen.

8. Umkehrosmose-Anlage nach Anspruch 7,
**dadurch gekennzeichnet, dass**
die Konzentratrückführung (20) ein Regelventil (8) umfasst, das je nach der vom Endverbraucher angeforderten Diluatmenge und/oder je nach der im Diluat erreichten Ionenkonzentration Ic einen bestimmten Teilbetrag des Konzentrats durch die Konzentratrückführung (20) leitet.

9. Umkehrosmose-Anlage nach einem der Ansprüche 1 bis 8,
**dadurch gekennzeichnet, dass**
die Umkehrosmose-Anlage eine Überbrückungsleitung (29) mit einem zweiten Regelventil (27) umfasst, welche zwischen dem Ausgang der Pumpe (16) und dem Diluat-Leitungssystem (19) geschaltet ist.

10. Umkehrosmose-Anlage nach einem der Ansprüche 1 bis 9,
**dadurch gekennzeichnet, dass**
dem Diluatausgang (15) ein erster Leitwertsensor (23) zugeordnet ist.

11. Umkehrosmose-Anlage nach Anspruch 9 oder 10,
**dadurch gekennzeichnet, dass**
dem Diluatausgang (15) und der Überbrückungsleitung (29) ein Diluatabfluss (25) nachgeschaltet ist.

12. Umkehrosmose-Anlage nach Anspruch 11,
**dadurch gekennzeichnet, dass**
dem Diluatabfluss (25) ein zweiter Leitwertsensor (28) zugeordnet ist.

13. Umkehrosmose-Anlage nach einem der Ansprüche 9 bis 12,
**dadurch gekennzeichnet, dass**
das zweite Regelventil (27) in Abhängigkeit von einem vom zweiten Leitwertsensor (28) erfassten Leitwert gesteuert ist.

14. Umkehrosmose-Anlage nach einem der Ansprüche 9 bis 13,
**dadurch gekennzeichnet, dass**
das zweite Regelventil (27) in Abhängigkeit von einem vom ersten Leitwertsensor (23) erfassten Leitwert gesteuert ist.

15. Umkehrosmose-Anlage, insbesondere nach einem der Ansprüche 1 bis 14,
**dadurch gekennzeichnet, dass**
die Pumpe (16) als Plungerpumpe ausgebildet ist.

16. Umkehrosmose-Anlage nach Anspruch 15,
**dadurch gekennzeichnet, dass**
die Plungerpumpe (16) drei Kolben oder ein Vielfaches von drei Kolben aufweist.

17. Umkehrosmose-Anlage nach Anspruch 15 oder 16,
**dadurch gekennzeichnet, dass**
die Plungerpumpe (16) für eine Anzahl von 0 bis 2800 Hubbewegungen pro Minute vorgesehen ist.

18. Umkehrosmose-Anlage nach einem der Ansprüche 15 bis 17,
**dadurch gekennzeichnet, dass**
die Plungerpumpe (16) über einen kontinuierlichen Druckbereich, insbesondere von 1 bis 80 bar, vorzugsweise von 1 bis 40 bar einstellbar ist.
